# EUROPEAN PATENT SPECIFICATION

(11) **EP 4 239 985 B1**
(45) Date of publication and mention of the grant of the patent: **16.07.2025**
(21) Application number: 21900776.2
(22) Date of filing: 24.09.2021
(51) Int. Cl.: H04M 1/02, H04M 1/03, G06F 1/16, G06F 3/01, G10L 15/02, G05B 11/28, G09F 9/30, G10L 21/0208, H04M 1/60, G06F 3/16

(54) **ELECTRONIC DEVICE COMPRISING EXPANDABLE DISPLAY**
ELEKTRONISCHE VORRICHTUNG MIT ERWEITERBARER ANZEIGE
DISPOSITIF ÉLECTRONIQUE À AFFICHAGE EXTENSIBLE

(30) Priority: 04.12.2020 KR 20200168943; 30.12.2020 KR 20200188249
(43) Date of publication of application: 06.09.2023
(73) Proprietor: Samsung Electronics Co., Ltd., Suwon-si, Gyeonggi-do 16677 (KR)
(72) Inventor: CHUNG, Myungkyoon, Suwon-si Gyeonggi-do 16677 (KR); KIM, Junghyung, Suwon-si Gyeonggi-do 16677 (KR); KIM, Hankon, Suwon-si Gyeonggi-do 16677 (KR); PARK, Daehee, Suwon-si Gyeonggi-do 16677 (KR); PARK, Junkyu, Suwon-si Gyeonggi-do 16677 (KR); SON, Dongil, Suwon-si Gyeonggi-do 16677 (KR); SONG, Jaehoon, Suwon-si Gyeonggi-do 16677 (KR); SHIM, Seungbo, Suwon-si Gyeonggi-do 16677 (KR); JUNG, Duhoon, Suwon-si Gyeonggi-do 16677 (KR)
(74) Representative: HGF
(86) International application number: PCT/KR2021/013069
(87) International publication number: WO 2022/119088

(56) References cited:
- WO-A1-2012/025794
- CN-U- 209 358 619
- JP-A- 2009 545 199
- KR-B1- 100 617 109
- KR-B1- 101 562 582
- KR-B1- 102 012 576
- US-A1- 2016 309 076
- US-B2- 9 311 909

## Description

### [Technical Field]

Various embodiments of the disclosure relate to an electronic device including an expandable display.

### [Background Art]

As technology develops, the use of displays in various forms of electronic devices is increasing in various industries such as automobiles and construction as well as information technology (IT) industries. Not only the form of electronic devices, but also the form of displays are becoming more diverse. Devices that include various forms of displays can provide users with new experiences by displaying content in various ways. In particular, as the usability of portable electronic devices becomes more diverse, the form of displays for displaying content is also becoming more diverse.

It is expected that electronic devices that include displays, as represented by the term "display of things" (DoT), will become more widespread in daily life in the future.

### [Disclosure of Invention]

### [Technical Problem]

An electronic device that includes an expandable display may change the state of the display from expansion to contraction or from contraction to expansion. The state of the display may be changed by the user's force, and the electronic device may also directly change the state of the display using a motor.

When the electronic device changes the state of the display using a motor while the microphone of the electronic device is being used, sound by the operation of the motor may be introduced into the microphone.

US 9311909 B2 discusses a system in a device which includes a microphone, a fan motor and a difference logic. WO 2012/025794 A1 discusses an apparatus which comprises a first transducer configured to detect sound and generate a first signal based on the detected sound. US 2016/309076 A1 discusses a digital camera which includes an optical assembly and image sensor. KR 101562582 B1 discusses a mobile terminal. KR 100617109 B1 discusses a voice communication terminal. KR 102012576 B1 discusses an electronic device including a flexible support and a control unit. JP 2009545199 A discusses a communication device. CN 209358619 U discusses a conversation voice noise reduction circuit and a conversation terminal.

### [Solution to Problem]

The scope of protection of the present invention is defined by the appended independent claims. Optional features are specified by the dependent claims.

### [Advantageous Effects of Invention]

According to various embodiments of this disclosure, even if an electronic device uses a motor to change a state of a display while a microphone of the electronic device is being used, a sound caused by the operation of the motor may be reduced.

### [Brief Description of Drawings]

FIG. 1 is a block diagram illustrating an electronic device in a network environment, according to various embodiments.
FIG. 2 is a simplified structural diagram illustrating an electronic device including an expandable display.
FIG. 3 illustrates an example of changing a state of a reducible display.
FIG. 4 illustrates an example of changing a state of an expandable display.
FIG. 5 illustrates an example of a signal received via a microphone as a display state of an electronic device is changed.
FIG. 6 illustrates an example of a signal received while a display state of a counterpart electronic device is changed.
FIG. 7 is an example of a flowchart illustrating an electronic device according to various embodiments.
FIG. 8 is another example of a flowchart illustrating an electronic device according to various embodiments.
FIG. 9 illustrates an example of a signal received via a microphone of an electronic device while the display state of the electronic device according to various embodiments is changed.
FIG. 10 illustrates an example of a signal received by a counterpart electronic device while a display state of an electronic device according to various embodiments is changed.

### [Mode for the Invention]

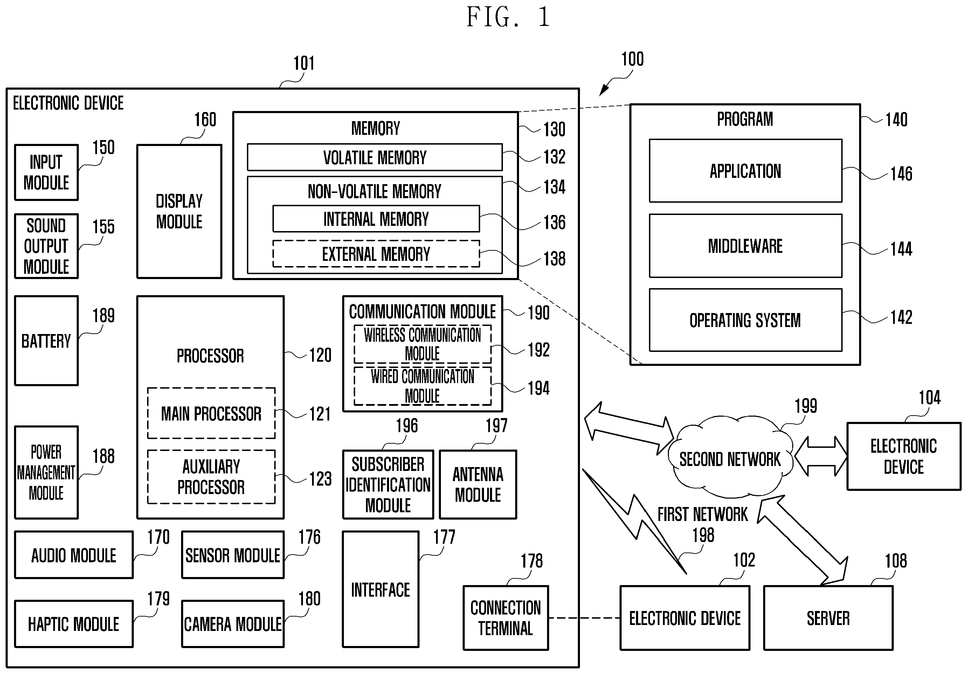

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connection terminal 178, a haptic module 179, a camera module 180, a power management module 188, a battery 189, a communication module 190, a subscriber identification module(SIM) 196, or an antenna module 197. In some embodiments, at least one of the components (e.g., the connection terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory may include at least one of an internal memory 136 and an external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., the electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

The connection terminal 178 may include a connector via which the electronic device 101 may be physically connected with the external electronic device (e.g., the electronic device 102). According to an embodiment, the connection terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter wave (mmWave) band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 gigabits per second (Gbps) or more) for implementing eMBB, loss coverage (e.g., 164 decibels (dB) or less) for implementing mMTC, or U-plane latency (e.g., 0.5 milliseconds (ms) or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form an mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices (e.g. electronic devices 102 and 104 or the server 108). For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

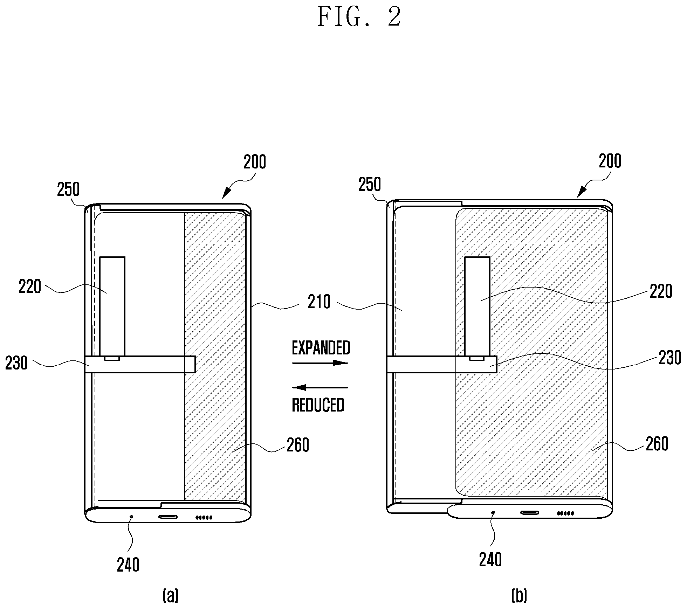

FIG. 2 is a simplified structural diagram illustrating an electronic device including an expandable display.

According to the invention, an electronic device 200 (e.g., the electronic device 101 of FIG. 1) includes a display 210, a motor 220, a microphone 240 and may include a rail 230, a roller 250, and an instrument support 260. According to various embodiments, the electronic device 200 may further include other components or may omit some components. According to various embodiments, the electronic device 200 may include a plurality of identical components. For example, a plurality of microphones 240 may be included in the electronic device, and the types thereof may be the same or different.

FIG. 2A illustrates a state in which the display 210 (e.g., the display module 160 of FIG. 1) of the electronic device is reduced, and FIG. 2B illustrates a state in which the display 210 of the electronic device is expanded. The display 210 may be expanded or reduced by a user's force. In addition, the electronic device 200 may expand or reduce the display 210 by driving the motor 220.

According to the invention, the display 210 included in the electronic device 200 is an expandable/reducible display and may be a rollable display. When the motor 220 included in the electronic device 200 pushes the display 210 using the rail 230, the display 210 may be expanded. Conversely, when the motor 220 pulls the display 210 using the rail 230, the display 210 may be reduced. The expandable or reducible display 210 may be supported by the instrument support 260. When the display 210 is reduced, a reduced portion of the display 210 may be rolled up on the roller 250 and stored. According to various embodiments, the expandable/reducible display 210 may be understood as a display 210 whose display area is expandable/reducible. For example, when the motor 220 included in the electronic device 200 pushes the display 210 using the rail 230, the display area of the display 210 may be expanded. When the motor 220 pulls the display 210 using the rail 230, the display area may be reduced.

According to various embodiments, when the display 210 is expanded or reduced by the driving of the motor 220, a sound according to the driving of the motor 220 may be generated. The sound generated according to the driving of the motor 220 may be received via the microphone 240. The frequency of the sound generated by driving the motor 220 may be mainly distributed in a specific frequency band. The sound generated according to the driving of the motor 220 may be noise. For example, when the user is in a call with the other party using the electronic device 200, the sound generated according to the driving of the motor 220 may be received via the microphone 240 and transmitted to the other party. When the volume of the sound generated by driving the motor 220 is greater than the volume of the user's voice, the other party may not be able to hear what the user is saying. As another example, when the user is recording a video using the electronic device 200, the sound generated by driving the motor 220 may be received via the microphone 240 and recorded. When the volume of the sound generated by driving the motor 220 is smaller than the surrounding ambient noise (e.g. bird chirping or wind noise), this may not be a problem. However, when the volume thereof is greater than the surround ambient noise, the surrounding ambient noise may be masked by the sound generated by driving the motor 220.

Meanwhile, the electronic device 200 in which the state of the display can be reduced or expanded may be referred to as a rollable electronic device or a slidable electronic device.

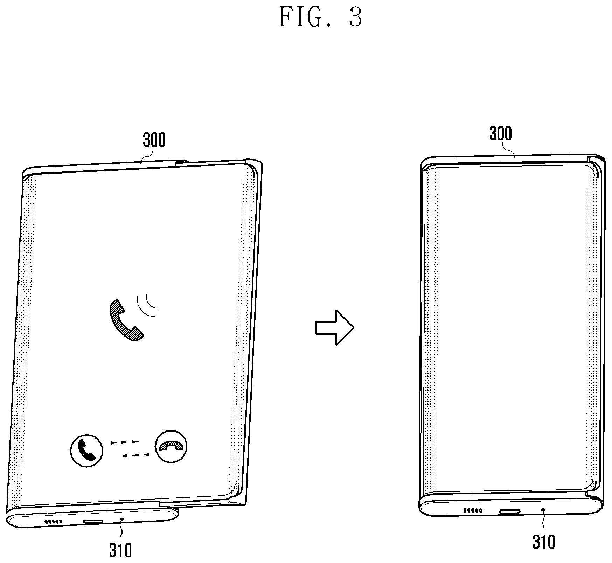

FIG. 3 illustrates an example of a scenario in which a state of a reducible display is changed.

Referring to FIG. 3, a user may receive a call when a display of an electronic device 300 (e.g., the electronic device 101 of FIG. 1 or the electronic device 200 of FIG. 2) is expanded and used. When the display of the electronic device is in an expanded state, the user may manually reduce the display to hold the electronic device 300 with one hand. Alternatively, the user may configure the display to be reduced when a specified condition is satisfied. For example, the user may configure the display to be reduced when a call is received (e.g., when the phone rings or vibrates) while the display is expanded. As another example, when the user receives a phone call (e.g., when the user presses a call button) while the display is expanded, the display may be configured to be reduced. The electronic device 300 may drive a motor to reduce the size of the display.

According to various embodiments, a sound generated by the motor driven by the electronic device 300 to reduce the display may be transmitted to the other party through the microphone 310. When the sound generated by the motor is lower than the user's voice, there is no problem. However, when the sound generated by the motor is louder than the user's voice, the other party may hear the sound generated by the motor together with the user's voice. The other party may not properly hear the user's voice due to the sound generated by the motor.

According to various embodiments, the electronic device 300 may need to drive the motor for several seconds to reduce the display. For example, the time required for the electronic device 300 to drive the motor may increase as the size of the display increases and the revolution per minute (rpm) of the motor decreases. When the time required for the electronic device 300 to drive the motor is long, the sound generated by the motor may be transmitted to the other party through the microphone 310.

According to various embodiments, the motor may vary according to the size and specification of the display, and the size of the electronic device, and thus the volume of the sound according to the driving of the motor may vary according to the type of the motor. When the sound of the motor driven by the electronic device 300 is loud, the sound generated by the motor may be transmitted to the other party through the microphone 310.

According to various embodiments, the frequency of the sound according to driving of the motor may vary depending on the type of the motor, pulse width modulation (PWM) of a signal driving the motor, and/or a combination of components (e.g., gear) configured together with the motor. According to various embodiments, the PWM of the signal driving the motor may be adjusted so that the frequency of the sound according to the driving of the motor does not overlap the frequency of a human voice. When the PWM of the signal driving the motor is adjusted, the speed of the motor may be adjusted.

According to various embodiments, the electronic device 300 may identify the size of the display and reduce the display only when the size of the display is greater than a threshold value.

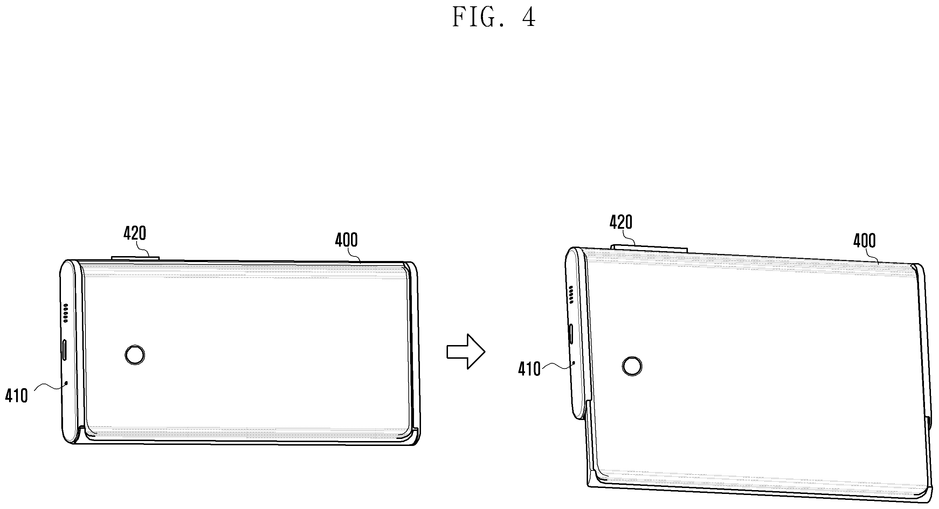

FIG. 4 illustrates an example of a scenario in which a state of a reducible display is changed.

Referring to FIG. 4, a user may wish to expand a display while recording a video in a state in which the display of an electronic device 400 (e.g., the electronic device 101 of FIG. 1 or the electronic device 200 of FIG. 2) is reduced. For example, the user may wish to expand and view a video being recorded. As another example, the user may wish to expand the display to further perform other tasks while recording a video. The user may configure a hardware key 420 (or software key) to expand the display. When the hardware key 420 is pressed by the user, the electronic device 400 may expand the display using a motor.

According to various embodiments, a sound generated by the motor driven by the electronic device 400 to expand the display may be recorded together with a video through the microphone 410. When the sound generated by the motor is lower than a sound to be recorded with the video (e.g. ambient sound), there may not be a problem. However, when the sound generated by the motor is greater than the sound to be recorded with the video, the sound generated by the motor may be recorded along with the video.

According to various embodiments, the electronic device 400 may need to drive the motor for several seconds to expand the display. For example, the time required for the electronic device 400 to drive the motor may increase as the display size increases and the revolution per minute (rpm) of the motor decreases. When the time for the electronic device 400 to drive the motor is long, the sound generated by the motor may be recorded.

According to various embodiments, the motor may vary according to the size and specification of the display, and the size of the electronic device, and thus the volume of a sound according to the driving of the motor may vary according to the type of the motor. When the sound of the motor driven by the electronic device 400 is loud, the sound generated by the motor may be recorded.

According to various embodiments, the frequency of the sound according to the driving of the motor may vary depending on the type of the motor, pulse width modulation (PWM) of a signal driving the motor, and/or a combination of components (e.g., gear) configured together with the motor. According to various embodiments, the PWM of the signal driving the motor may be adjusted so that the frequency of the sound according to the driving of the motor does not overlap the frequency of a human voice. When the PWM of the signal driving the motor is adjusted, the speed of the motor may be adjusted.

Although FIG. 4 illustrates an example of expanding the display, it may also be applied to a case of reducing the display.

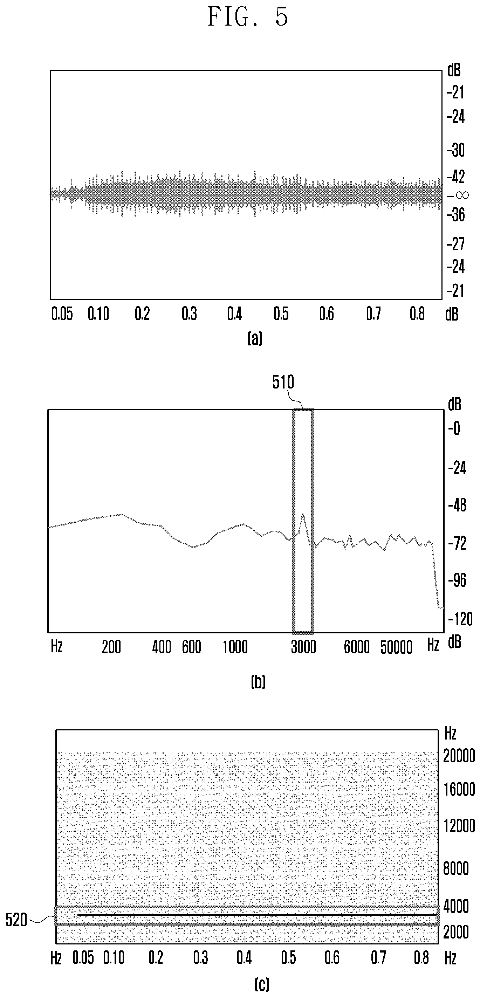

FIG. 5 illustrates an example of a signal received via a microphone as a display state of an electronic device is changed.

FIG. 5A illustrates the volume of a sound according to the driving of the motor. Referring to FIG. 5A, it may be confirmed that a sound of a certain level or more is generated while the motor is driving.

FIG. 5B illustrates the magnitude of each frequency by converting a sound according to the driving of the motor into a frequency. The frequency of the sound generated by driving the motor may be mainly distributed in a specific frequency band. Referring to FIG. 5B, in operation 510, it may be confirmed that the frequency of the sound according to the driving of the motor is concentrated at 3100 Hz.

FIG. 5C illustrates energy for each frequency over time by converting a sound according to the driving of the motor into a frequency. Referring to FIG. 5C, in operation 520, it may be confirmed that the energy of the sound according to the driving of the motor is concentrated at a frequency of 3100 Hz.

In FIGS. 5B and 5C, the frequency of the sound according to the driving of the motor is 3100 Hz, but the frequency of the sound according to the driving of the motor may vary depending on the type of motor, PWM of a signal driving the motor, and/or a combination of components (e.g. gears) configured together with the motor. According to various embodiments, the PWM of the signal driving the motor may be adjusted so that the frequency of the sound according to the driving of the motor does not overlap the frequency of a human voice. When the PWM of the signal driving the motor is adjusted, the speed of the motor may be adjusted.

As to the sound according to the driving of the motor, it can be seen from FIGS. 5A, 5B, and 5C that energy (e.g., the volume of the sound) is concentrated at a specific frequency band at a constant level regardless of time.

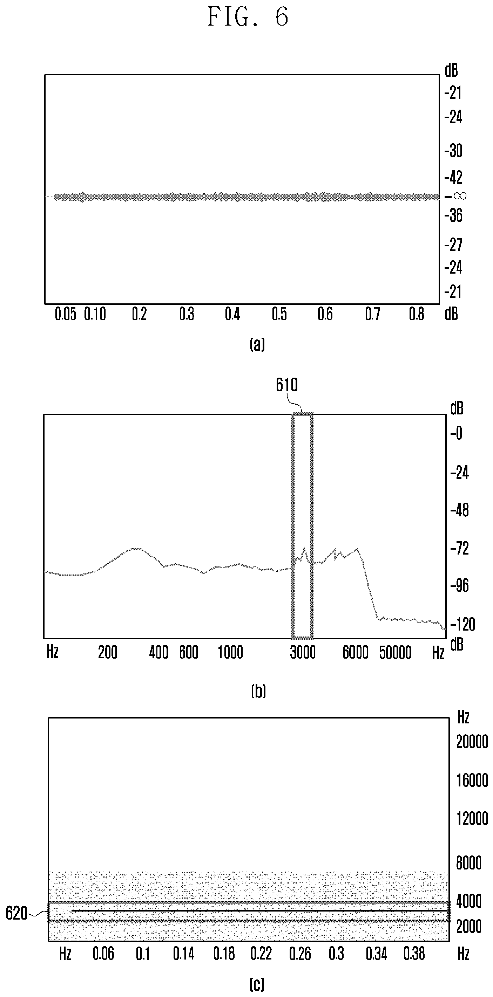

FIG. 6 illustrates an example of a signal received while a display state of a counterpart electronic device is changed.

FIGS. 6A illustrates the volume of a sound according to driving of a motor of a counterpart electronic device. Referring to FIG. 6A, it may be confirmed that a sound of a certain level or higher is generated while the motor of the counterpart electronic device is executed. Although the sound generated while the motor of the counterpart electronic device is executed is smaller than what the user hears directly, the sound may be heard as noise.

FIG. 6B illustrates the magnitude of each frequency by converting a sound into a frequency according to the driving of the motor of the counterpart electronic device. Referring to FIG. 6B, in operation 610, it may be confirmed that the frequency of the sound according to the driving of the motor of the counterpart electronic device is concentrated at 3100 Hz as shown in FIG. 5B.

In FIG. 6B, the frequency of the sound according to the driving of the motor is 3100 Hz, but the frequency of the sound according to the driving of the motor may vary depending on the type of the motor, the PWM of the signal driving the motor and/or a combination of components (e.g., gear) configured together with the motor.

FIG. 6C illustrates energy of each frequency over time by converting a sound according to the driving of the motor of the counterpart electronic device into a frequency. Referring to FIG. 6C, in operation 620, it may be confirmed that the energy of the sound according to the driving of the motor of the counterpart electronic device is also concentrated at a frequency of 3100 Hz. As illustrated in FIG. 6C, the counterpart electronic device may filter and transmit only signals of a specific frequency band (e.g., audible frequency band).

As in FIGS. 5A, 5B, and 5C, from FIGS. 6A, 6B, and 6C, it may be confirmed that energy (e.g., the volume of the sound) of the sound according to the driving of the motor of the counterpart electronic device is concentrated at a specific frequency band with a constant volume regardless of time.

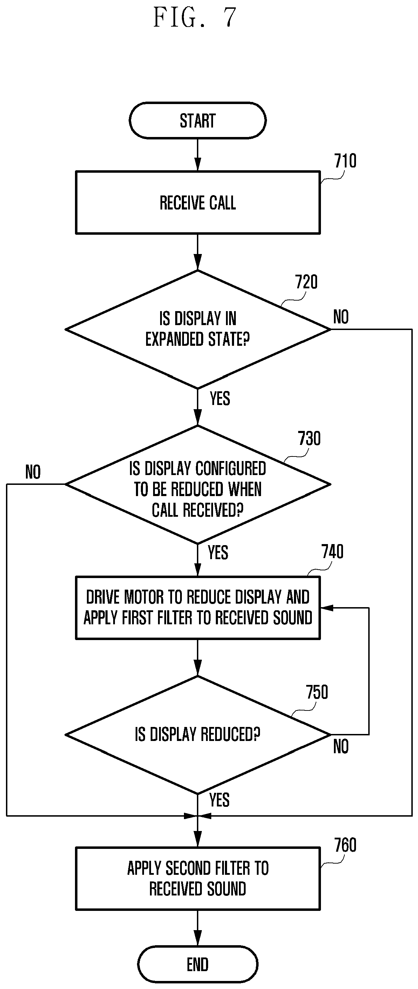

FIG. 7 is an example of a flowchart illustrating an electronic device according to various embodiments. According to various embodiments, the example may be an example of receiving a phone call by an electronic device.

In operation 710, a phone call (e.g., a voice call or a video call) may be received by the electronic device.

According to various embodiments, the electronic device may not perform operations 720 to 750 when a video call is received. According to various embodiments, the user may configure whether to perform operations 720 to 750 according to the type of the call. For example, the user may configure operations 720 to 750 to be performed regardless of whether the call is a voice call or a video call. As another example, the user may configure operations 720 to 750 to be performed only in the case of the voice call.

In operation 720, the electronic device may identify whether the display is in an expanded state. According to various embodiments, the electronic device is a rollable electronic device or a slidable electronic device, and the display may be expanded or reduced. According to various embodiments, the electronic device may change the state of the display by driving a motor.

According to various embodiments, when the display is not in the expanded state, the electronic device may perform operation 760.

In operation 730, when the display is in the expanded state, the electronic device may identify whether the display is configured to be reduced when a call is received. Such configuration may be performed by a user or may be performed when the electronic device is manufactured.

According to various embodiments, the electronic device may identify whether there is a request for a reduction of the display. For example, when the user does not configure the display to be reduced but the display needs to be reduced, the user may request to reduce the display using a software key, a hardware key, or/and a configured gesture.

In operation 740, when the display is configured to be reduced when the phone call is received according to the configuration, the electronic device may drive the motor to reduce the display and apply a first filter to a sound received via the microphone. According to various embodiments, the first filter may be a filter for removing the frequency of the sound according to the driving of the motor.

According to various embodiments of the disclosure, the electronic device may identify whether the frequency of the sound according to driving of the motor overlaps the frequency of a human voice, and adjust the PWM of the signal driving the motor so that the frequency of the sound according to the driving of the motor does not overlap the frequency of a human voice.

According to various embodiments, operation 740 may be performed when a specific button (e.g., a "call" button) is pressed by a user.

In operation 750, the electronic device may identify whether the display is reduced.

According to various embodiments, when the display is not yet reduced, the electronic device may continue to perform operation 740. The electronic device may apply a first filter to a sound received via the microphone while reducing the display.

In operation 760, when the display is reduced, the electronic device may apply a second filter to the sound received via the microphone. According to various embodiments, the second filter may be a filter configured suitable for receiving a human voice.

In the above, the state of the display is briefly referred to as the expanded state or the reduced state. However, according to the configuration, when the size (e.g., width, length) of the display exposed to the user is greater than a first threshold value, it may be configured to be an enlarged state, and when the size of the display is smaller than a second threshold value, it may be configured to be a reduced state. According to various embodiments, the first threshold value may be greater than the second threshold value. According to various embodiments, the first threshold value and the second threshold value may also be configured by a user or/and the manufacturer of the electronic device. The user may configure the first threshold value and the second threshold value according to the size of the hand and the purpose of using the phone. For example, when the size of the user's hand is large, the first threshold value and the second threshold may be configured to be large. As another example, when the user frequently receives calls and calls for a long time, the first threshold value and the second threshold value may be configured to be small.

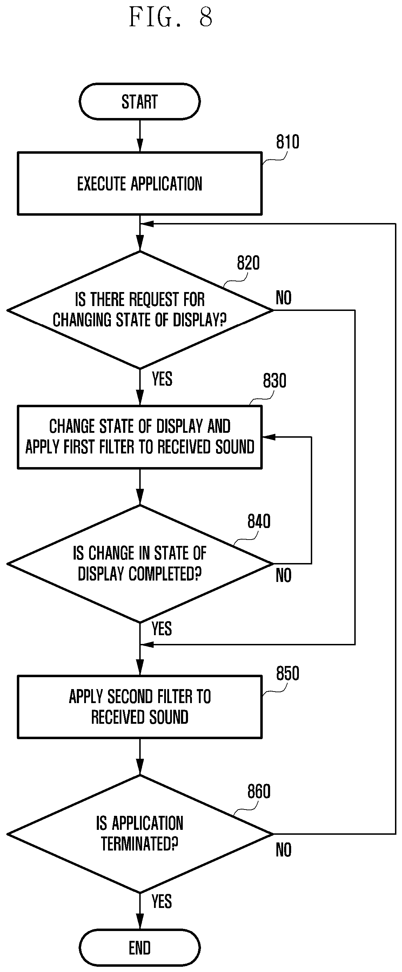

FIG. 8 is a flowchart illustrating an electronic device according to the invention. According to various embodiments, another example may be an example of executing an application including a function of using a sound received using a microphone in the electronic device.

In operation 810, the electronic device executes an application. According to various embodiments, the electronic device may execute the application by a user. The application includes a function of using a sound received via the microphone. An example may be a video recording application capable of recording the sound received via the microphone as well as the video.

In operation 820, the electronic device identifies whether a change in the state of the display has been requested. The electronic device may identify whether the change in the state of the display has been requested while the application is executed. According to various embodiments, the request for changing the state of the display may be generated by a software key, a hardware key, or/and a configured gesture.

According to various embodiments, when there is no request for changing the state of the display, the electronic device may perform operation 850.

In operation 830, when there is the request for changing the state of the display, the electronic device changes the state of the display by driving the motor. According to various embodiments, the request for changing the state of the display may be a request for expanding the display or reducing the display.

According to various embodiments, the electronic device applies a first filter to the sound received via the microphone. The first filter may be a filter for removing the frequency of the sound according to the driving of the motor.

According to various embodiments, the electronic device may identify whether the frequency of the sound according to the driving of the motor overlaps the frequency of a sound (e.g., bird chirping, music sound, or conversation sound) configured to be suitable for use of the application, and adjust the PWM of a signal driving the motor so that the frequency of the sound according to the driving of the motor does not overlap the frequency of the sound configured to be suitable for use of the application.

In operation 840, the electronic device identifies whether the change in the state of the display is completed.

According to various embodiments, when the change in the display state is not completed, the electronic device may continue to perform operation 830.

In operation 850, when the change in the state of the display is completed, the electronic device applies a second filter to the sound received via the microphone. According to various embodiments, the second filter may be a filter configured to be suitable for use of the application.

In operation 860, the electronic device may identify whether the application is terminated. According to various embodiments, the electronic device may perform operation 820 again when the application is not terminated.

In the above, the change in the state of the display is briefly described, but the state of the display may be determined by configuration. For example, when the size (e.g., width and length) of the display exposed to the user is larger than a first threshold value, it may be configured to be an expanded state, and when the size thereof is smaller than a second threshold value, it may be configured to be a reduced state. According to various embodiments, the first threshold value may be greater than the second threshold value. According to various embodiments, the first threshold value and the second threshold value may also be configured by a user or/and the manufacturer of the electronic device.

According to various embodiments, the change in the state of the display may be divided into a plurality of states of the display even in the case of expansion, and may be divided into a plurality of states of the display even in the case of reduction. Depending on the degree of exposure of the display to the user, the state of the display (e.g., expanded 1, expanded 2, expanded 3, reduced 1, reduced 2, and reduced 3) may be configured. According to various embodiments, the user may configure the number of the states of the display differently depending on the size of the display, and may configure the state of the display (e.g., the size of the display) differently even according to the purpose of use.

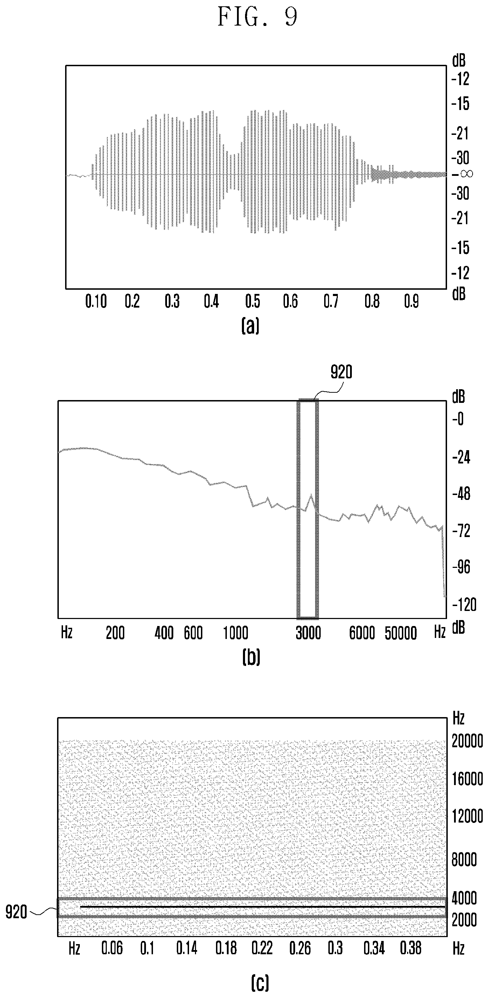

FIG. 9 illustrates an example of a signal received via a microphone of an electronic device while a display state of the electronic device according to various embodiments is changed.

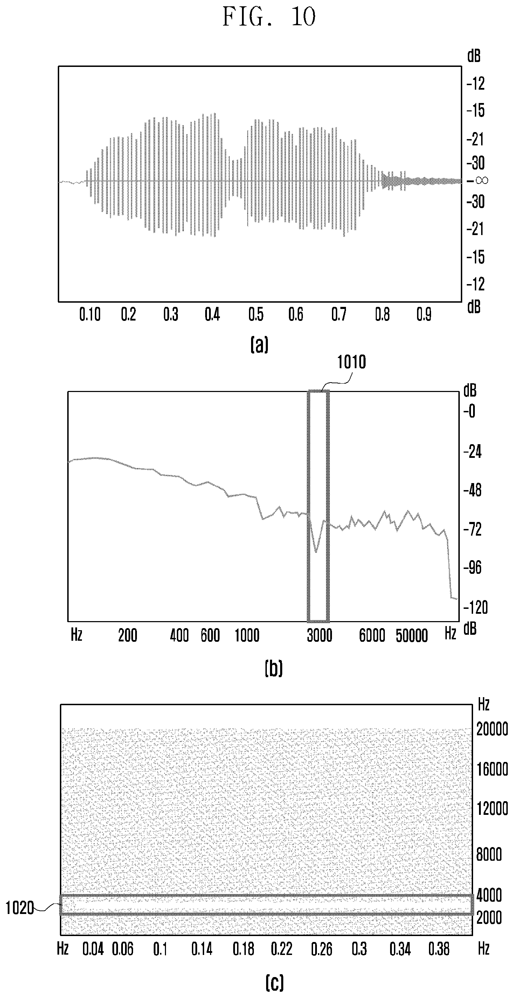

FIG. 9A illustrates the magnitude of a signal received via a microphone of an electronic device while the electronic device drives a motor to change a display state. Referring to FIG. 10A, it may be confirmed that the signal received via the microphone is received along with the user's voice in addition to the sound according to driving of the motor.

FIG. 9B illustrates a result of analyzing a frequency component of a signal received via a microphone of an electronic device while driving a motor. Based on a comparison between FIGS. 5B and FIG. 9B, in operation 910, it may be confirmed that a signal of 3100 Hz, which is the frequency of the sound according to the driving of the motor, is included in the voice signal.

FIG. 9C illustrates energy for each frequency over time by converting a signal received via a microphone of an electronic device into a frequency while driving a motor. Based on a comparison between FIG. 5C and FIG. 9C, in operation 920, it may be confirmed that the energy of the signal of 3100 Hz, which is the frequency of the sound according to the driving of the motor, is also included along with the energy of the voice signal.

In FIGS. 9B and 9C, the frequency of the sound according to the driving of the motor is 3100 Hz, but the frequency of the sound according to the driving of the motor may vary according to the type of the motor, the PWM of a signal driving the motor, and/or a combination of components (e.g., gear) configured together with the motor. According to various embodiments, the PWM of the signal driving the motor may be adjusted so that the frequency of the sound according to the driving of the motor does not overlap the frequency of a human voice. When the PWM of the signal driving the motor is adjusted, the speed of the motor may be adjusted.

FIG. 10 illustrates an example of a signal received by a counterpart electronic device while a display state of the electronic device according to various embodiments is changed.

FIG. 10A illustrates the magnitude of a signal transmitted from an electronic device to a counterpart electronic device while driving a motor for changing a display state. Referring to FIG. 10A, it may be confirmed that the driving sound of the motor is filtered out of the signal received by the counterpart electronic device while the motor is driving and only the user's voice is transmitted.

FIG. 10B illustrates a result of analyzing the frequency component of a signal transmitted from an electronic device to a counterpart electronic device while the motor is driven. Referring to FIG. 10B, in operation 1010, it may be seen that the signal of 3100 Hz, which is the frequency of the sound according to the driving of the motor, has been filtered.

FIG. 10C illustrates energy for each frequency over time by converting a signal transmitted from an electronic device to a counterpart electronic device into a frequency while the motor is driven. Referring to FIG. 10C, in operation 1020, it may be confirmed that a signal having a frequency of 3100 Hz is filtered, and it may be confirmed that the energy of the signal transmitted from the electronic device to the counterpart electronic device during the driving of the motor has been also filtered at the frequency of 3100 Hz.

From FIGS. 10A, 10B, and 10C, it may be confirmed that, when the electronic device filters and transmits the sound at the specific frequency band according to the driving of the motor, the counterpart electronic device does not receive the sound according to the driving of the motor and receives the user's voice.

In FIGS. 10B and 10C, the frequency of the sound according to the driving of the motor is 3100 Hz, but may vary according to the type of the motor, the PWM of the signal driving the motor, and/or a combination of components (e.g., gear) configured together with the motor. According to various embodiments, the PWM of the signal driving the motor may be adjusted so that the frequency of the sound according to the driving of the motor does not overlap the frequency of a human voice. When the PWM of the signal driving the motor is adjusted, the speed of the motor may be adjusted.

It should be appreciated that various embodiments of the disclosure and the terms used therein are not intended to limit the technological features set forth herein to particular embodiments and include various changes or replacements for a corresponding embodiment.

With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it denotes that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101, 200, 300, 400) comprising:
a motor (220);
a microphone (240, 310, 410);
a display (210) which is capable of changing between an expanded state and a reduced state; and
a processor (120),
wherein the processor is configured to:
receive a request for changing a state of the display area while an application using a sound received via the microphone is executed;
drive the motor to change the state of the display area in response to the request;
apply a first filter to a sound received via the microphone while changing the state of the display area; and
apply a second filter different from the first filter to a sound received via the microphone in response to identifying that changing in the state of the display area is completed.

2. The electronic device (101, 200, 300, 400) of claim 1,
wherein the processor (120) is configured to:
identify whether the display area is in an expanded state in case that a call is received;
identify whether the display area has been configured to be reduced in case that the display area is in the expanded state;
in case that the display (210) has been configured to be reduced, drive the motor (220) to reduce the display area and apply the first filter to a sound received via the microphone (240, 310, 410) while the display area is being reduced; and
apply the second filter to a sound received via the microphone in case that the display area is reduced.

3. The electronic device (101, 200, 300, 400) of claim 2, wherein the first filter is a filter configured to remove a frequency of the sound according to the driving of the motor (220), and
wherein the second filter is a filter configured to be suitable for receiving a human voice.

4. The electronic device (101, 200, 300, 400) of claim 2, wherein the processor (120) is configured to:
identify whether a frequency of the sound according to the driving of the motor (220) overlaps a frequency of a human voice; and
adjust pulse width modulation, PWM, of a signal driving the motor so that the frequency of the sound according to the driving of the motor does not overlap the frequency of the human voice.

5. The electronic device (101, 200, 300, 400) of claim 2, wherein the expanded state is a state in which the size of the display area is greater than a first threshold value, and
wherein the reduced state is a state in which the size of the display area is smaller than a second threshold value.

6. The electronic device (101, 200, 300, 400) of claim 1, wherein the first filter is a filter for removing a frequency of the sound according to the driving of the motor (220), and
wherein the second filter is a filter configured to be suitable for use of the application.

7. The electronic device (101, 200, 300, 400) of claim 1, wherein the processor (120) is configured to:
identify whether a frequency of the sound according to the driving of the motor (220) overlaps the frequency of the sound configured to be suitable for the use of the application; and
adjust PWM of a signal driving the motor so that the frequency of the sound according to the driving of the motor does not overlap the frequency of the sound configured to be suitable for the use of the application.

8. The electronic device (101, 200, 300, 400) of claim 1, wherein the request for changing the state of the display area is generated by a software key, a hardware key, or a configured gesture.

9. The electronic device (101, 200, 300, 400) of claim 1, wherein the processor (120) is configured to:
identify whether the application is terminated;
identify again whether the request for changing the state of the display area has been received in case that the application is not terminated;
drive the motor (220) to change the state of the display area in case that it is identified that the request for changing the state of the display area has been received;
apply the first filter to a sound received via the microphone (240, 310, 410); and
apply the second filter to a sound received via the microphone in case that the change in the state of the display area is completed.

10. The electronic device (101, 200, 300, 400) of claim 1, wherein the request for changing the state of the display area is a request for adjusting the size of the display area.

11. A method of operating an electronic device (101, 200, 300, 400), the method comprising:
receiving a request for changing a state of a display area while an application using a sound received via a microphone (240, 310, 410) is executed;
driving a motor (220) to change the state of the display area in response to the request;
applying a first filter to a sound received via the microphone while changing the state of the display area; and
applying a second filter different from the first filter to a sound received via the microphone in response to identifying that changing the state of the display area is completed.

12. The method of claim 11, the method further comprising:
identifying whether the display area is in an expanded state in case that a call is received;
identifying whether the display area has been configured to be reduced in case that the display area is in the expanded state;
in case that the display area has been configured to be reduced, driving the motor (220) to reduce the display area while the display area is being reduced;
applying the first filter to a sound received via the microphone (240, 310, 410); and
applying the second filter to a sound received via the microphone in case that the display area is reduced.

13. The method of claim 12, wherein the first filter of the electronic device (101, 200, 300, 400) is a filter for removing a frequency of the sound according to the driving of the motor (220), and
wherein the second filter is a filter configured to be suitable for receiving a human voice.

14. The method of claim 12, further comprising:
identifying whether a frequency of the sound according to the driving of the motor (220) overlaps a frequency of a human voice; and
adjusting PWM of a signal driving the motor so that the frequency of the sound according to the driving of the motor does not overlap the frequency of the human voice.

15. The method of claim 12, wherein the expanded state is a state in which the size of the display area is greater than a first threshold value, and
wherein a reduced state is a state in which the size of the display area is smaller than a second threshold value.

## Patentansprüche

1. Elektronische Vorrichtung (101, 200, 300, 400), umfassend:
einen Motor (220);
ein Mikrofon (240, 310, 410);
eine Anzeige (210), die in der Lage ist, zwischen einem erweiterten Zustand und einem reduzierten Zustand zu wechseln; und
einen Prozessor (120),
wobei der Prozessor zu Folgendem konfiguriert ist:
Empfangen einer Anforderung zum Wechseln eines Zustands des Anzeigebereichs, während eine Anwendung unter Verwendung eines Tons, der über das Mikrofon empfangen wird, ausgeführt wird;
Antreiben des Motors, um den Zustand des Anzeigebereichs als Reaktion auf die Anforderung zu wechseln;
Anwenden eines ersten Filters auf einen Ton, der über das Mikrofon empfangen wird, während der Zustand des Anzeigebereichs gewechselt wird; und
Anwenden eines zweiten Filters, der sich von dem ersten Filter unterscheidet, auf einen Ton, der über das Mikrofon empfangen wird, als Reaktion auf das Identifizieren, dass Wechseln des Zustands des Anzeigebereichs abgeschlossen ist.

2. Elektronische Vorrichtung (101, 200, 300, 400) nach Anspruch 1,
wobei der Prozessor (120) zu Folgendem konfiguriert ist:
Identifizieren, ob der Anzeigebereich in einem erweiterten Zustand ist, falls ein Anruf empfangen wird;
Identifizieren, ob der Anzeigebereich konfiguriert worden ist, um reduziert zu sein, falls der Anzeigebereich in dem erweiterten Zustand ist;
falls die Anzeige (210) konfiguriert worden ist, um reduziert zu sein, Antreiben des Motors (220), um den Anzeigebereich zu reduzieren und Anwenden des ersten Filters auf einen Ton, der über das Mikrofon (240, 310, 410) empfangen wird, während der Anzeigebereich reduziert wird; und
Anwenden des zweiten Filters auf einen Ton, der über das Mikrofon empfangen wird, falls der Anzeigebereich reduziert ist.

3. Elektronische Vorrichtung (101, 200, 300, 400) nach Anspruch 2, wobei der erste Filter ein Filter ist, der konfiguriert ist, um eine Frequenz des Tons gemäß dem Antreiben des Motors (220) zu entfernen, und
wobei der zweite Filter ein Filter ist, der konfiguriert ist, um zum Empfangen einer menschlichen Stimme geeignet zu sein.

4. Elektronische Vorrichtung (101, 200, 300, 400) nach Anspruch 2, wobei der Prozessor (120) zu Folgendem konfiguriert ist:
Identifizieren, ob eine Frequenz des Tons gemäß dem Antreiben des Motors (220) eine Frequenz einer menschlichen Stimme überlappt; und
Einstellen von Impulsbreitenmodulation, PWM, eines Signals, das den Motor antreibt, sodass die Frequenz des Tons gemäß dem Antreiben des Motors die Frequenz der menschlichen Stimme nicht überlappt.

5. Elektronische Vorrichtung (101, 200, 300, 400) nach Anspruch 2, wobei der erweiterte Zustand ein Zustand ist, in dem die Größe des Anzeigebereichs größer als ein erster Schwellenwert ist, und
wobei der reduzierte Zustand ein Zustand ist, in dem die Größe des Anzeigebereichs kleiner als ein zweiter Schwellenwert ist.

6. Elektronische Vorrichtung (101, 200, 300, 400) nach Anspruch 1, wobei der erste Filter ein Filter zum Entfernen einer Frequenz des Tons gemäß dem Antreiben des Motors (220) ist, und
wobei der zweite Filter ein Filter ist, der konfiguriert ist, um zur Verwendung der Anwendung geeignet zu sein.

7. Elektronische Vorrichtung (101, 200, 300, 400) nach Anspruch 1, wobei der Prozessor (120) zu Folgendem konfiguriert ist:
Identifizieren, ob eine Frequenz des Tons gemäß dem Antreiben des Motors (220) die Frequenz des Tons, der konfiguriert ist, um für die Verwendung der Anwendung geeignet zu sein, überlappt; und
Einstellen von PWM eines Signals, das den Motor antreibt, sodass die Frequenz des Tons gemäß dem Antreiben des Motors die Frequenz des Tons, der konfiguriert ist, um für die Verwendung der Anwendung geeignet zu sein, nicht überlappt.

8. Elektronische Vorrichtung (101, 200, 300, 400) nach Anspruch 1, wobei die Anforderung zum Wechseln des Zustands des Anzeigebereichs durch einen Softwareschlüssel, einen Hardwareschlüssel oder eine konfigurierte Geste erzeugt wird.

9. Elektronische Vorrichtung (101, 200, 300, 400) nach Anspruch 1, wobei der Prozessor (120) zu Folgendem konfiguriert ist:
Identifizieren, ob die Anwendung beendet ist;
erneutes Identifizieren, ob die Anforderung zum Wechseln des Zustands des Anzeigebereichs empfangen worden ist, falls die Anwendung nicht beendet ist;
Antreiben des Motors (220), um den Zustand des Anzeigebereichs zu wechseln, falls identifiziert wird, dass die Anforderung zum Wechseln des Zustands des Anzeigebereichs empfangen worden ist;
Anwenden des ersten Filters auf einen Ton, der über das Mikrofon (240, 310, 410) empfangen wird; und
Anwenden des zweiten Filters auf einen Ton, der über das Mikrofon empfangen wird, falls die Änderung des Zustands des Anzeigebereichs abgeschlossen ist.

10. Elektronische Vorrichtung (101, 200, 300, 400) nach Anspruch 1, wobei die Anforderung zum Wechseln des Zustands des Anzeigebereichs eine Anforderung zum Einstellen der Größe des Anzeigebereichs ist.

11. Verfahren zum Betreiben einer elektronischen Vorrichtung (101, 200, 300, 400), wobei das Verfahren Folgendes umfasst:
Empfangen einer Anforderung zum Wechseln eines Zustands eines Anzeigebereichs, während eine Anwendung unter Verwendung eines Tons, der über ein Mikrofon (240, 310, 410) empfangen wird, ausgeführt wird;
Antreiben eines Motors (220), um den Zustand des Anzeigebereichs als Reaktion auf die Anforderung zu wechseln;
Anwenden eines ersten Filters auf einen Ton, der über das Mikrofon empfangen wird, während der Zustand des Anzeigebereichs gewechselt wird; und
Anwenden eines zweiten Filters, der sich von dem ersten Filter unterscheidet, auf einen Ton, der über das Mikrofon empfangen wird, als Reaktion auf das Identifizieren, dass Wechseln des Zustands des Anzeigebereichs abgeschlossen ist.

12. Verfahren nach Anspruch 11, wobei das Verfahren ferner Folgendes umfasst:
Identifizieren, ob der Anzeigebereich in einem erweiterten Zustand ist, falls ein Anruf empfangen wird;
Identifizieren, ob der Anzeigebereich konfiguriert worden ist, um reduziert zu sein, falls der Anzeigebereich in dem erweiterten Zustand ist;
falls der Anzeigebereich konfiguriert worden ist, um reduziert zu sein, Antreiben des Motors (220), um den Anzeigebereich zu reduzieren, während der Anzeigebereich reduziert wird;
Anwenden des ersten Filters auf einen Ton, der über das Mikrofon (240, 310, 410) empfangen wird; und
Anwenden des zweiten Filters auf einen Ton, der über das Mikrofon empfangen wird, falls der Anzeigebereich reduziert ist.

13. Verfahren nach Anspruch 12, wobei der erste Filter der elektronischen Vorrichtung (101, 200, 300, 400) ein Filter zum Entfernen einer Frequenz des Tons gemäß dem Antreiben des Motors (220) ist, und
wobei der zweite Filter ein Filter ist, der konfiguriert ist, um zum Empfangen einer menschlichen Stimme geeignet zu sein.

14. Verfahren nach Anspruch 12, ferner umfassend:
Identifizieren, ob eine Frequenz des Tons gemäß dem Antreiben des Motors (220) eine Frequenz einer menschlichen Stimme überlappt; und
Einstellen von PWM eines Signals, das den Motor antreibt, sodass die Frequenz des Tons gemäß dem Antreiben des Motors die Frequenz der menschlichen Stimme nicht überlappt.

15. Verfahren nach Anspruch 12, wobei der erweiterte Zustand ein Zustand ist, in dem die Größe des Anzeigebereichs größer als ein erster Schwellenwert ist, und
wobei ein reduzierter Zustand ein Zustand ist, in dem die Größe des Anzeigebereichs kleiner als ein zweiter Schwellenwert ist.

## Revendications

1. Dispositif électronique (101, 200, 300, 400), comprenant :
un moteur (220) ;
un microphone (240, 310, 410) ;
un dispositif d'affichage (210) qui est capable de changer entre un état étendu et un état réduit ; et
un processeur (120),
ledit processeur étant configuré pour :
recevoir une demande de changement d'état de la zone d'affichage pendant qu'une application utilisant un son reçu par l'intermédiaire du microphone est exécutée ;
entraîner le moteur pour changer l'état de la zone d'affichage en réponse à la demande ;
appliquer un premier filtre à un son reçu par l'intermédiaire du microphone tout en changeant l'état de la zone d'affichage ; et
appliquer un second filtre différent du premier filtre à un son reçu par l'intermédiaire du microphone en réponse à l'identification de l'achèvement du changement d'état de la zone d'affichage.

2. Dispositif électronique (101, 200, 300, 400) de la revendication 1,
ledit processeur (120) étant configuré pour :
identifier si la zone d'affichage est dans un état étendu dans le cas où un appel est reçu ;
identifier si la zone d'affichage a été configurée pour être réduite dans le cas où la zone d'affichage se trouve dans l'état étendu ;
dans le cas où le dispositif d'affichage (210) a été configuré pour être réduit, entraîner le moteur (220) pour réduire la zone d'affichage et appliquer le premier filtre à un son reçu par l'intermédiaire du microphone (240, 310, 410) pendant que la zone d'affichage est en cours de réduction ; et
appliquer le second filtre à un son reçu par l'intermédiaire du microphone dans le cas où la zone d'affichage est réduite.

3. Dispositif électronique (101, 200, 300, 400) de la revendication 2, ledit premier filtre étant un filtre configuré pour supprimer une fréquence du son selon l'entraînement du moteur (220), et
ledit second filtre étant un filtre configuré pour convenir à la réception d'une voix humaine.

4. Dispositif électronique (101, 200, 300, 400) de la revendication 2, ledit processeur (120) étant configuré pour :
identifier si une fréquence du son selon l'entraînement du moteur (220) chevauche une fréquence d'une voix humaine ; et
régler la modulation de largeur d'impulsion, PWM, d'un signal entraînant le moteur afin que la fréquence du son selon l'entraînement du moteur ne chevauche pas la fréquence de la voix humaine.

5. Dispositif électronique (101, 200, 300, 400) de la revendication 2, ledit état étendu étant un état dans lequel la taille de la zone d'affichage est supérieure à une première valeur seuil, et ledit
état réduit étant un état dans lequel la taille de la zone d'affichage est inférieure à une seconde valeur seuil.

6. Dispositif électronique (101, 200, 300, 400) de la revendication 1, ledit premier filtre étant un filtre configuré pour supprimer une fréquence du son selon l'entraînement du moteur (220), et
ledit second filtre étant un filtre configuré pour convenir à l'utilisation de l'application.

7. Dispositif électronique (101, 200, 300, 400) de la revendication 1, ledit processeur (120) étant configuré pour :
identifier si une fréquence du son selon l'entraînement du moteur (220) chevauche la fréquence du son configuré pour convenir à l'utilisation de l'application ; et
régler le PWM d'un signal entraînant le moteur afin que la fréquence du son selon l'entraînement du moteur ne chevauche pas la fréquence du son configuré pour convenir à l'utilisation de l'application.

8. Dispositif électronique (101, 200, 300, 400) de la revendication 1, ladite demande de changement de l'état de la zone d'affichage étant générée par une clé logicielle, une clé matérielle ou un geste configuré.

9. Dispositif électronique (101, 200, 300, 400) de la revendication 1, ledit processeur (120) étant configuré pour :
identifier si l'application est terminée ;
identifier à nouveau si la demande de changement d'état de la zone d'affichage a été reçue dans le cas où l'application n'est pas terminée ;
entraîner le moteur (220) pour changer l'état de la zone d'affichage dans le cas où il est identifié que la demande de changement de l'état de la zone d'affichage a été reçue ;
appliquer le premier filtre à un son reçu par l'intermédiaire du microphone (240, 310, 410) ; et
appliquer le second filtre à un son reçu par l'intermédiaire du microphone dans le cas où le changement d'état de la zone d'affichage est achevé.

10. Dispositif électronique (101, 200, 300, 400) de la revendication 1, ladite demande de changement de l'état de la zone d'affichage étant une demande de réglage de la taille de la zone d'affichage.

11. Procédé de fonctionnement d'un dispositif électronique (101, 200, 300, 400), le procédé comprenant :
la réception d'une demande de changement d'état de la zone d'affichage pendant qu'une application utilisant un son reçu par l'intermédiaire du microphone (240, 310, 410) est exécutée ;
l'entraînement du moteur (220) pour changer l'état de la zone d'affichage en réponse à la demande ;
l'application d'un premier filtre à un son reçu par l'intermédiaire du microphone tout en changeant l'état de la zone d'affichage ; et
l'application d'un second filtre différent du premier filtre à un son reçu par l'intermédiaire du
microphone en réponse à l'identification de l'achèvement du changement d'état de la zone d'affichage.

12. Procédé de la revendication 11, le procédé comprenant en outre :
l'identification pour savoir si la zone d'affichage est dans un état étendu dans le cas où un appel est reçu ;
l'identification pour savoir si la zone d'affichage a été configurée pour être réduite dans le cas où la zone d'affichage se trouve dans l'état étendu ;
dans le cas où la zone d'affichage a été configurée pour être réduite, l'entraînement du moteur (220) pour réduire la zone d'affichage pendant que la zone d'affichage est en cours de réduction ;
l'application du premier filtre à un son reçu par l'intermédiaire du microphone (240, 310, 410) ; et
l'application du second filtre à un son reçu par l'intermédiaire du microphone dans le cas où la zone d'affichage est réduite.

13. Procédé de la revendication 12, ledit premier filtre du dispositif électronique (101, 200, 300, 400) étant un filtre configuré pour supprimer une fréquence du son selon l'entraînement du moteur (220), et
ledit second filtre étant un filtre configuré pour convenir à la réception d'une voix humaine.

14. Procédé de la revendication 12, comprenant en outre :
l'identification pour savoir si une fréquence du son selon l'entraînement du moteur (220) chevauche une fréquence d'une voix humaine ; et
le réglage de la PWM d'un signal entraînant le moteur afin que la fréquence du son selon l'entraînement du moteur ne chevauche pas la fréquence de la voix humaine.

15. Procédé de la revendication 12, ledit état étendu étant un état dans lequel la taille de la zone d'affichage est supérieure à une première valeur seuil, et
un état réduit étant un état dans lequel la taille de la zone d'affichage est inférieure à une seconde valeur seuil.
